# EUROPEAN PATENT SPECIFICATION

(11) **EP 0 717 931 B1**
(45) Date of publication and mention of the grant of the patent: **08.11.2000**
(21) Application number: 95303869.2
(22) Date of filing: 06.06.1995
(51) Int. Cl.: A23G 1/00

(54) **Low softening point chocolate and process for producing thereof**
Schokolade mit niedrigem Erweichungspunkt und Herstellungsverfahren
Chocolat à point de ramollissement bas et procédé de fabrication

(30) Priority: 23.09.1994 JP 25450394
(43) Date of publication of application: 26.06.1996
(73) Proprietor: FUJI OIL COMPANY, LIMITED, Osaka-shi, Osaka-fu 542 (JP)
(72) Inventor: Kida, Haruyasu, Kitasoma-gun, Ibaraki-ken (JP); Arai, Masako, Tsukuba-gun, Ibaraki-ken (JP); Tashiro, Yoichi, Kitasoma-gun, Ibaraki-ken (JP); Baba, Hideki, Sennan-gun, Osaka-fu (JP)
(74) Representative: Baverstock, Michael George Douglas

(56) References cited:
- EP-A- 0 285 422
- EP-A- 0 321 227
- EP-A- 0 426 155
- EP-A- 0 502 697
- EP-A- 0 547 651
- WO-A-93/24017
- US-A- 4 199 611
- US-A- 4 364 868
- US-A- 4 594 259

## Description

The present invention relates to chocolate which can be marketed at ordinary room temperature in spite of its low softening point.

It is well known that chocolate softens at 33 to 34°C, although it is solid at ordinary room temperature. The raw materials thereof are cacao mass, cacao butter, sugar, powdered milk and the like and the melting properties of chocolate are mainly derived from the fat ingredient in chocolate, i.e., cacao butter. Cacao butter is mainly composed of POSt, StOSt and POP glycerides, wherein P is palmitic acid, O is oleic acid and St is stearic acid. Typical chocolate to be eaten as it is as sweets (hereinafter referred to as "per se chocolate sweets") contains about 32% by weight of cacao butter. A P/St ratio as an average value calculated from total constituent fatty acids of the glycerides is about 0.7 to 0.8. Other fats (hard butter) are often used as substitutes for all or a part of cacao butter in order to save production cost or to improve physical properties of chocolate.

Chocolate is used not only as solid per se chocolate sweets such as bar chocolate and tablet chocolate for tasting its own flavors, tastes and physical mouthfeel, but also used as raw materials of confectionery in combination with other foods, more particularly used as, for example coating materials, enrobers, filling materials and decorations of iced or baked confectionery. In general, excellent flavor, taste and physical mouthfeel are strictly required in the case of the former use, i.e. in the case of chocolate used as solid per se chocolate sweets.

The above-described hard butter to be used as a substitute for cacao butter is generally divided into tempering and non-tempering types.

Hard butter of tempering type is obtained from shea butter, sal fat, illipe butter, palm oil or a fractionated oil thereof. Like cacao butter, hard butter is mainly composed of 2-unsaturated-1,3-disaturated triglyceride (SUS). Saturated fatty acids thereof are mainly composed of palmitic acid (P) and stearic acid (St). Recently, as a technique for obtaining hard butter rich in SUS, enzymatic interesterification has also been pervasive. Because hard butter of this type is very similar to cacao butter structurally, it is free from problems such as blooming and lowering of heat stability caused by using it in combination with cacao butter. However, for the production of per se chocolate sweets, a tempering treatment is required.

Palm medium melting point fraction is hard butter of this type and is rich in POP triglyceride. It is effective for improving melting properties of chocolate in the mouth. However, there is a problem that the amount of palm medium melting point fraction used should be small (JP-A 53-115863) because the fraction is unsuitable for per se chocolate sweets, while a relatively larger amount thereof is used for raw materials of confectionery such as a coating material, an enrober, a filling material (for example, JP-A 60-221035). In addition, there is a problem that mixing with triglycerides other than SUS is remarkably limited even when it is used for per se chocolate sweets (for example JP-A 61-209545).

On the other hand, typical hard butter of the non-tempering type includes hard butter of trans-acid type or lauric acid type. Hard butter of trans-acid type is obtained by isomerization and hydrogenation of a fractionated soft part of palm oil and the like, or a liquid oil such as soybean oil. Hard butter of trans-acid type is composed of triglycerides containing a relatively larger amount of trans-acids in the constituent fatty acids. On the contrary, hard butter of lauric acid type is obtained from fats containing a large amount of lauric acid moiety such as coconut oil, palm kernel oil, babassu oil or a fractionated oil thereof. Hard butter of a lauric acid type is composed of triglycerides containing much lauric acid in the constituent fatty acids. Because hard butter of a non-tempering type does not possess remarkable polymorphism, it has an advantage that tempering treatment is not required in the production of chocolate. However, the hard butter of non-tempering type is mainly used as the fat ingredient of chocolate in the above-described combined foods because it is generally recognized that it can be used with cocoa butter only in a limited proportion (JP-A 60-221035).

In the case of per se chocolate sweets such as bar chocolate and combined foods with baked confectionery, temperature of the chocolate to be eaten is usually at a range of ordinary room temperature, i.e., about 20°C. However, in the case of a combined confectionery such as chocolate coating of ice cream, the temperature is at a range of freezing. When chocolate to be eaten at the former temperature range are used for that to be eaten at a temperature range of freezing or refrigerating, mouthfeel of the chocolate is hard to bite and eat and it is difficult to melt in the mouth. In addition, when per se chocolate sweets are prepared by using a chocolate material mix such as conventional ice coating chocolate, it is unsuitable for per se chocolate sweets because it has a very pasty and unpleasant mouthfeel, different from conventional bar and tablet chocolate.

JP-A 54-20941 discloses a process for producing chocolate to be cooled and eaten. By rapid cooling without tempering treatment, while maintaining unstable crystals, a product having a low melting point which is suitable for eating at a low temperature can be obtained, although a tempering type fat is used. In addition to coating of ice cream, the above patent application discloses the use of chocolate as per se chocolate sweets. The chocolate has a somewhat pasty mouthfeel because of the use of a liquid fat and improvement of physical mouthfeel thereof as per se chocolate sweets is still required. However, when the product is maintained at a freezing temperature, conversion of unstable fat crystals into stable crystals is prevented and thereby deterioration of gloss caused by formation of coarse crystals is prevented. In addition, the product has a low melting point and is soft. Therefore, the product is suitable for eating at a low temperature. On the other hand, since conversion of unstable fat crystals into stable crystals proceeds at ordinary room temperature, different from marketing of conventional per se chocolate sweets, marketing thereof is limited to that in a frozen state.

Thus, to develop chocolate having physical mouthfeel suitable for eating at a low temperature which can be marketed at ordinary room temperature has been desired.

In addition, JP-A 63-240745 discloses an additive for chocolate and chocolate production using the additive. The additive comprises pulverized stable crystals form particles mainly composed of SUS the constituent unsaturated fatty acids of which have 18 or more carbon atoms and the constituent saturated fatty acids of which have 20 to 24 carbon atoms. According to the above patent application, the additive is effective for omitting or simplifying tempering treatment in chocolate production and is also effective for obtaining such heat-stable chocolate that fat blooming can be inhibited even after storage at about body temperature, where shape retention of chocolate is lost, for a certain period. However, since the melting point of the pulverized stable crystal form particles mainly composed of SUS is higher than 50°C, melting properties in the mouth at a low temperature are liable to be diminished.

JP-A 64-60330 also discloses an additive chocolate and chocolate production using the additive. The additive comprises pulverized stable crystalline form particles mainly composed of SUS the constituent unsaturated fatty acids of which have 18 carbon atoms and the constituent saturated fatty acids of which have 16 to 18 carbon atoms. The additive is effective for omitting or simplifying tempering treatment in chocolate production and the melting point thereof is slightly higher than 40°C.

EP-A-0 502 697 describes a chocolate whose oil ingredient comprises 10 to 85% wt% di-saturated mono-unsaturated glycerides in which the unsaturated fatty acid residue is bonded at the β position (SUS). Said triglycerides have 2 saturated fatty acid residues which have 12 to 22 carbon atoms and palmitic acid, stearic acid and their esters with monohydric alcohols. They are said to be useful sources of fatty acids "S". A chocolate is specifically mentioned which comprises a fat including i) a fat in an amount of 40 wt% containing 70.5 wt% St₂L and ii) 60 wt% soybean oil. Said chocolate has a softening point of 22.2°C. The specification further describes a process for producing the above chocolate by an ordinary method, wherein said fat is blended together with cocoa, powdered sugar, lecithin and vanillin. The chocolate is however used in frozen deserts and eaten at low temperatures.

EP-A-0 547 651 describes compositions for the confectionery industry which combine cool-melting characteristics with good non-softening properties. However, it is concerned with non-lauric triglyceride compositions.

EP-A-0 285 422 describes a chocolate with a soft mouthfeel at a low temperature and at the beginning of mastication. However, the specification is directed to improving heat resistance and contains StOSt as the main component of S₂U. Therefore it does not teach or suggest a chocolate having a low softening point.

EP-A-0 321 227 mentions that shortening contributes to the elimination or simplification of the tempering operation of a hard butter product and can eliminate the re-heating step of tempering in the production of a hard butter. The specification discloses SUS type triglycerides the total carbon atoms of the constituent fatty acid residues of which is more than 50. These SUS type triglycerides include SUS, the constituent saturated fatty acids of which have 20 to 24 carbon atoms as in the present invention. However, the specifically disclosed SUS in the Examples of this prior art is stable crystals of SUS having less than 56 of the total carbon atoms of the constituent fatty acid residues.

One object of the present invention is to provide chocolate which can be marketed at ordinary room temperature in spite of its low softening point.

Another object of the present invention is to provide chocolate having excellent hardness and melting properties in the mouth as per se chocolate sweets upon eating at a low temperature, i.e., not only at a temperature in winter season but also at a temperature range of freezing or refrigerating.

In particular, the present invention is directed to chocolate confectioneries which have excellent physical mouthfeel at the above-described low temperature and scarcely have limitations in marketing as required for conventional combined foods with baked confectionery to be cooled and eaten.

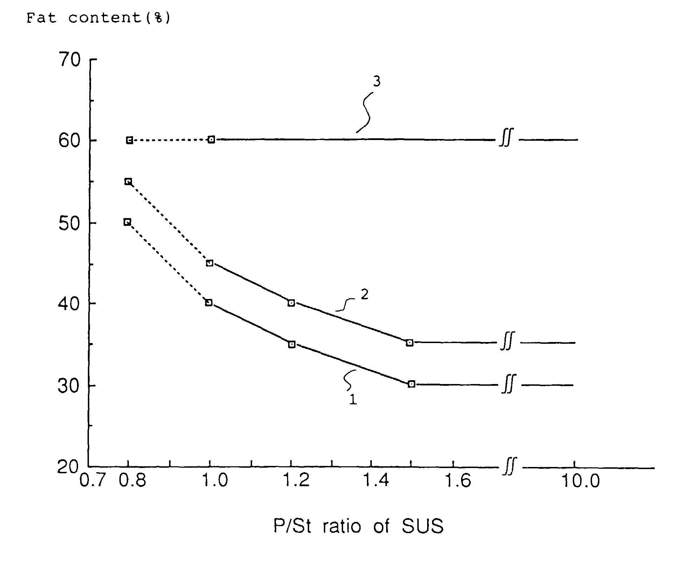

These objects as well as other objects and advantages of the present invention will become apparent to those skilled in the art from the following description with reference to the accompanying drawing what is a graph illustrating the relation between the fat content of chocolate and the P/St ratio of SUS.

The present inventors have intensively studied with a concept that the marketing limitation as described in the above JP-A 54-20941 would be minimized when chocolate having physical properties suitable for eating at a low temperature can be obtained even with tempering. As a result, the present inventors have succeeded in producing chocolate of tempering type which has a softening point of 30°C or lower.

On the other hand, the present inventors tried to use a chocolate additive containing pulverized stable crystalline form particles mainly composed of SUS the constituent unsaturated fatty acids of which have 18 carbon atoms and the constituent saturated fatty acids having 16 to 18 carbon atoms to improve marketability to the same level as that of conventional chocolate made from cacao butter. However, any remarkable improvement could not be obtained.

The present inventors have unexpectedly found that an additive containing pulverized stable crystals form particles mainly composed of SUS the constituent unsaturated fatty acids of which have 18 or more carbon atoms and the constituent saturated fatty acids of which have 20 to 24 carbon atoms can be used without difficulty, which is seemingly inconsistent with improvement of physical mouthfeel of chocolate at a low temperature, and that limitations in marketability of products can be further minimized. Thus, the present invention has been made.

According to the present invention there is provided chocolate having a softening point of 15 to 30°C, wherein its fat ingredient comprises at least 40% by weight of fats rich in 2-unsaturated-1,3-disaturated triglycerides (SUS), the main constituent saturated fatty acids (S) of which have 16 to 18 carbon atoms, and independent stable crystals of only SUS, the constituent saturated fatty acids of which have 20 to 24 carbon atoms.

The present invention also provides a process for producing chocolate which comprises adding a material containing SUS stable crystals, the constituent saturated fatty acids of which have 20 to 24 carbon atoms, to a chocolate material mix having a softening point of 15 to 30°C and containing at least 40% by weight of fats rich in 2-unsaturated-1,3-disaturated triglycerides (SUS), the main constituent saturated fatty acids (S) of which have 16 to 18 carbon atoms, in its fat ingredient during a cooling step of the melted mix.

The term "chocolate" used herein generally includes chocolate containing cacao mass and white chocolate without cacao mass. The term is not specifically limited to chocolate defined by any law and made from prescribed ingredients.

The softening point of the chocolate of the present invention is 15 to 30°C. The fat ingredient of the chocolate of the present invention comprises at least 40% by weight of fats rich in 2-unsaturated-1,3-disaturated triglycerides the main constituent saturated fatty acids (S) of which have 16 to 18 carbon atoms. The fat ingredient also contains stable crystals of only SUS the constituent saturated fatty acids of which have 20 to 24 carbon atoms.

Hereinafter, all "percents" and "parts" are by weight unless otherwise stated.

In the present invention, the softening point is measured according to the method described in Japan Oil Chemists' Society, Standard Fats Analytical Test Method 2.3.4.3-86, Softening Point (Ring and Ball Method) except that a sample chocolate is subjected to tempering treatment after melting and filling into a ring and then solifidied at 5°C for 30 minutes and that the softening point is measured after aging at 20°C for 24 hours.

In the present invention, the softening point of the chocolate is 15 to 30 °C. When the softening point is too high, excellent hardness and melting properties in the mouth cannot be provided upon eating the chocolate at a low temperature range of freezing or refrigeration. Preferably the softening point is 28°C or lower. When the softening point is too low, melting of the surface occurs unless it is eaten at ordinary room temperature range just after being taken out of a low temperature range such as in a refrigerator. In addition, it is difficult to hold it by the fingers.

The fat ingredient of the chocolate of the present invention comprises 40% or more of fats rich in 2-unsaturated-1,3-disaturated triglycerides (SUS) the main constituent saturated fatty acids (S) of which have 16 to 18 carbon atoms and stable crystals of only SUS the main constituent saturated fatty acids of which have 20 to 24 carbon atoms.

Preferably, the fats rich in SUS in which S has 16 to 18 carbon atoms are a fat containing 40% or more, preferably 50% or more of SUS or a mixture thereof. Preferably, U is oleic acid. Examples of the fats include natural materials such as cocoa butter, palm oil, shea butter, illipe butter and sal fat, synthesized fats such as those obtained by enzymatic interesterification, fractionated oils thereof and mixtures thereof.

SUS in which S has 20 to 24 carbon atoms is also known from JP-A 63-58941. Since the SUS is present alone as stable crystals, the fine structure of chocolate can be maintained without melting even when the SUS in which S has 16 to 18 carbon atoms melts and a temperature is raised to several degrees higher than its softening point, which results in a loss of shape retention of the chocolate. Thereby, conversion of the SUS in which S has 16 to 18 carbon atoms carbon number into stable crystals is assisted upon cooling afterwards and the chocolate can recover its glossy appearance.

SUS in which the S has 20 to 24 carbon atoms exists solely as stable crystals. That is, the SUS is present in a crystalline form different from other fat crystals (eutectic crystals). Such a state can be detected by DSC analysis, X-ray analysis and the like. Such a state can also be recognized by the phenomenon that the chocolate recovers good glossy appearance even after it is exposed to a temperature ranging from its softening point to 2 to 3°C higher than the softening point and then cooled.

The above-described stable crystals are β-form and crystals other than such stable form hardly provide the above-described recovering effect.

It is desired that SUS in which S has 20 to 24 carbon atoms is present in an amount of 0.5 to 3% in the chocolate. However, it is not necessary that all the SUS is in the form of stable crystals. When the amount of the SUS is too small, the desired effect is hardly expected. When the amount of the SUS is too large, the melting properties of the chocolate of the present invention which has a low softening point are diminished. In any event, when the SUS is used within this range, unexpectedly, properties for eating at a low temperature range, particularly a temperature range of freezing or refrigerating are not diminished and the limitations in marketing of the product are significantly improved.

Preferred conditions for obtaining chocolate suitable for eating at a low temperature range, particularly a temperature range of freezing or refrigerating have been disclosed in our co-pending Japanese Patent Application No. 227851/1994. The detailed conditions are as follows.

Specifically, preferably, the fat ingredient of the chocolate contains 95 to 40%, more preferably 90 to 50% of fats rich in SUS in which S has 16 to 18 carbon atoms and 5 to 40%, more preferably 10 to 30% of lauric fats and the ratio of the constituent saturated fatty acid having 16 carbon atoms (P) to that having 18 carbon atoms (St) of the SUS (P/St ratio) is at least 1, more preferably 1.2 to 10.0. For this purpose, from the economical viewpoint, it is advantageous to use, as the fat rich in SUS, palm medium melting point fraction alone or in combination with other fats rich in SUS. Examples of the lauric fats include known lauric fats the main constituent fatty acid of which is lauric acid such as coconut oil, palm kernel oil, and babassu oil and fractionated oils thereof.

When the amount of fats rich in SUS in which S has 16 to 18 carbon atoms is small and the amount of lauric fats is large, hardness or snapping properties upon eating as per se chocolate sweets are diminished, or undesirable pasty mouthfeel emerges when the composition has a relatively high fat content. On the contrary, when the amount of the former is large and the amount of the latter is small, the softening point of chocolate derived from the hardness of the SUS cannot be lowered sufficiently and mouthfeel as chocolate to be eaten at a low temperature is hard.

It is desired that the fat content of the chocolate is higher according to the P/St ratio. As seen from the drawing, the relation between the P/St ratio of SUS to the fat content in the chocolate is on or in the higher oil content region above line 1 drawn by taking the points of
1.0 of the P/St ratio and 40% of the fat content,
1.2 of the P/St ratio and 35% of the fat content, and
1.5 of the P/St ratio and 30% of the fat content preferably, on or in the higher oil content region above line 2 drawn by taking the points of
1.0 of the P/St ratio and 45% of the fat content,
1.2 of the P/St ratio and 40% of the fat content, and
1.5 of the P/St ratio and 35% of the fat content
in a graph plotting the fat content as ordinate and the P/St ratio as abscissa. However, preferably, the fat content is not more than 60% as shown by line 3 in the drawing.

In the present invention, in order to further improve mouthfeel, particularly preferred conditions other than the above are such that the P/St ratio of SUS in the fat ingredient of the chocolates is 3 or more, preferably, 3 to 10. Alternatively, palm medium melting point fraction having an iodine value (IV) of 40 or more, preferably, 42 to 52 is used as the fat rich in SUS or a low melting fraction of lauric fats as a lauric fat is used regardless of the P/St ratio of SUS in the fat ingredient of the chocolate being 3 or more.

For obtaining 3 or more of the P/St ratio of SUS in the fat ingredient of the chocolate, the use of cacao butter and other SUS type hard butter rich in StOSt is controlled. Although an iodine value (IV) of palm medium melting point fraction most commonly used as hard butter is at a range of 30 to 35, by using palm medium melting point fraction having a relatively higher IV, a wide variety of lauric fats can be used.

However, in the present invention, milk fat can be contained in the fat ingredient (20% or less in the fat ingredient) as whole powdered milk for milk chocolate or white chocolate and it is possible to add a small amount of a fat having low melting point, for example, a fat which is liquid at ordinary room temperature in so far as desired physical properties are not diminished.

The chocolate of the present invention is advantageous in that it recovers its original glossy state by cooling even after it is exposed to a temperature higher than the softening point, i.e. loss of its shape retention. In addition to the glossy state, for maintaining its shape, preferably, the chocolate is held in a mold.

Such a mold is disclosed in, for example, JP-A 62-215346. A flexible mold obtained by providing a suitable number of recesses in the desired shape to a sheet of thermoplastic resin such as polypropylene, hard polyethylene, polyethylene terephthalate, polystyrene or polyvinyl chloride is conveniently and suitably used.

As described hereinabove, the chocolates of the present invention have excellent hardness and melting properties in the mouth at a low temperature range, i.e. not only at a temperature in winter season but also at a temperature range of freezing and refrigerating. Thus, the chocolates is novel frozen or refrigerated chocolate which has not been found in the prior art.

The process for producing chocolates of the present invention is characterized by adding a material containing stable crystals of SUS in which S has 20 to 24 carbon atoms to a melted chocolate material mix the fat ingredient of which comprises 40% or more of fats rich in SUS the main constituent S of which has 16 to 18 carbon atoms and having a softening point of 15 to 30°C during a cooling step thereof from the melted state.

The chocolate material mix having a softening point of 15 to 30°C the fat ingredient of which comprises 40% or more of fats rich in SUS the main constituent S of which has 16 to 18 carbon atoms and its more preferred conditions are as described above. Likewise, the stable crystals of the SUS in which S has 20 to 24 carbon atoms are as described above.

The chocolate material mix is cooled and solidified from its melted state according to a conventional method. In order to obtain uniform dispersion, it is desired that the material containing stable crystals of the SUS in which S has 20 to 24 carbon atoms is preferably a powdered or plastic additive. The production of such a powdered additive and addition thereof are described in JP-A 63-240745. In addition, the additive is commercially available (sold by Fuji Oil Co., Ltd.). The particle size of the additive is 100 µm or smaller, preferably 50 µm or smaller. In addition, a powdered ingredient known to be an ingredient of a chocolate material mix , for example, sugar, can be added to the additive as a dispersion carrier or medium. The plastic additive can be prepared according to the method described in JP-A 2-4063.

Preferably, the additive is added to the chocolate material mix at a temperature range between its softening point to about 5°C higher than the softening point during the cooling step. This is most effective because tempering is accelerated in addition to improvement of physical properties of the chocolate. Thereby, the chocolate can be produced without a so-called re-heating step and considerable supercooling and difficulty in operation due to increase in viscosity resulted from supercooling, which are often encountered in the tempering of chocolate having a lower softening point as that of the present invention, can be improved.

After dispersion of the additive, the chocolate material mix is further cooled and solidified. When the solidification is carried out in the above-described flexible mold, not only the gloss of the surface but also the shape can be well maintained and the product is easily eaten.

The following reference examples, examples and comparative examples further illustrate the present invention in detail. However, they are not to be construed to limit the scope of the present invention.

### Reference Example 1

### Preparation of a material containing stable crystals of SUS in which S has 20 to 24 carbon atoms

Ethyl ester of behenic acid and high-oleic sunflower oil were interesterified with a lipase having 1,3-selectivity. After subjecting the interesterified product to solvent fractionation and concentration, the product was recrystallized from hexane and the solvent was distilled off by a vacuum pump whilst preventing melting of the crystals. The crystals were pulverized with cooling, mixed with an equal amount of powdered sugar and freeze-pulverized in liquid nitrogen to the mean particle size of about 20 µm or smaller to obtain a powdered additive. The crystal form of the SUS was β form. According to HPLC analysis, the additive was composed of AOS 0.2%, BOS 2.8%, BLB 2.5%, BOA 14.0%, BOB 75.9%, BOLi (2-oleylbeheniclignocerine) 4.3% and other glycerides 0.4% (A: arachic acid, B: behenic acid and Li: lignoceric acid).

### Reference Example 2

### Preparation of a material containing stable crystals of SUS in which S has less than 20 carbon atoms.

A high melting point fraction was obtained from alanbrachia extracted oil with an yield of 59.1% and this fraction was aged for a long period of time. Then, it was freeze-pulverized in liquid nitrogen to obtain an additive of β-form crystal powder (mean particle size: 11.4 µm).

The fatty acid compositions and the melting points of the additives of Reference Examples 1 and 2 are shown in Table 1. The melting point was measured by putting a sample into a glass tube up to about 5 mm height from the closed bottom of the glass tube the inner diameter of which was 1 mm. The closed bottom of the tube was contacted with a globe part of a thermometer. The measurement was carried out by heating in a water bath.

**Table 1**

| Fatty acid composition | | | | | | | |
|---|---|---|---|---|---|---|---|
| (chain length:number of double bond) | | | | | | | |
| Example | C16:0 | C18:0 | C18:1 | C18:2 | C20:0 | C22:0 | C24:0 |
| Reference Example 1 | 0.1 | 0.8 | 27.9 | 1.1 | 5.9 | 61.5 | 2.5 |
| Reference Example 2 | 0.6 | 64.1 | 35.2 | - | 0.1 | - | - |

| Melting point | | | | | | | |
|---|---|---|---|---|---|---|---|
| Example | | beginning of melting/end of melting | | | | | |
| Reference Example 1 | | 51.4°C/52.8°C | | | | | |
| Reference Example 2 | | 42.4°C/43.6°C | | | | | |

### Examples 1 to 7 and Comparative Examples 1 to 5

### Experiments for illustrating suitability for chocolate material mix having low softening point

According to the formulations as shown in Tables 2-1 and 2-2, cacao butter, palm medium melting point fraction (PMF) (IV = 34.0 and elevated melting point = 30.0°C, or IV = 45.0 and open tube melting point (slipping point of A.O.C.S. Official Method Cc 3-25) = 26.0°C), a lauric fat (a palm kernel low melting point fraction i.e., palm kernel olein having IV of 25.0 and open tube melting point 21°C, or coconut oil having IV of 8.5 and open tube melting point 24.1°C) were melted and mixed together. Then, lecithin was added to the mixture to prepare a fat phase. On the other hand, cacao mass, whole powdered milk and sugar were mixed together and then a part of the above fat phase was added to the mixture and the mixture was subjected to roll-refining. After conching at 50°C, the remaining fat phase was admixed to the mixture.

**Table 2-1**

| Preferred chocolate formulations (parts) | | | | | | | |
|---|---|---|---|---|---|---|---|
| Ingredient | Ex.1 | Ex.2 | Ex.3 | Ex.4 | Ex.5 | Ex.6 | Ex.7 |
| Cacao mass | 15.0 | 15.0 | 15.0 | 15.0 | 15.0 | 0.0 | 15.0 |
| Whole powdered milk | 20.0 | 20.0 | 15.0 | 20.0 | 10.0 | 30.0 | 20.0 |
| Sugar | 40.0 | 35.0 | 35.0 | 45.0 | 25.0 | 35.0 | 34.0 |
| Cacao butter | 0.0 | 10.0 | 15.0 | 0.0 | 20.0 | 0.0 | 12.0 |
| PMF(IV 34) | 15.0 | 0.0 | 0.0 | 15.0 | 20.0 | 30.0 | 0.0 |
| PMF(IV 45) | 0.0 | 10.0 | 16.0 | 0.0 | 0.0 | 0.0 | 9.0 |
| Palm kernel olein | 10.0 | 10.0 | 0.0 | 5.0 | 10.0 | 0.0 | 10.0 |
| Coconnt oil | 0.0 | 0.0 | 4.0 | 0.0 | 0.0 | 5.0 | 0.0 |
| Lecithin | 0.4 | 0.4 | 0.4 | 0.4 | 0.4 | 0.4 | 0.4 |
| Flavor | pq | pq | pq | pq | pq | pq | pq |
| pq: proper quantity | | | | | | | |

**Table 2-2**

| Unsuitable chocolate formulations (parts) | | | | | |
|---|---|---|---|---|---|
| Ingredient | Comp. Ex.1 | Comp. Ex.2 | Comp. Ex.3 | Comp. Ex.4 | Comp. Ex.5 |
| Cacao mass | 15.0 | 15.0 | 15.0 | 15.0 | 15.0 |
| Whole powdered milk | 20.0 | 20.0 | 15.0 | 15.0 | 20.0 |
| Sugar | 40.0 | 40.0 | 35.0 | 35.0 | 45.0 |
| Cacao butter | 25.0 | 15.0 | 15.0 | 5.0 | 9.0 |
| PMF(IV=45) | 0.0 | 0.0 | 18.0 | 10.0 | 6.0 |
| Palm kernel olein | 0.0 | 10.0 | 0.0 | 20.0 | 5.0 |
| Coconnt oil | 0.0 | 0.0 | 2.0 | 0.0 | 0.0 |
| Lecithin | 0.4 | 0.4 | 0.4 | 0.4 | 0.4 |
| Flavor | pq | pq | pq | pq | pq |
| pq: proper quantity | | | | | |

The fat composition in the raw material is shown in Table 3. In Table 3, the fat content (%) represents the amount of the fat ingredient in the chocolate material mix and the amounts of SUS and lauric fats represent the amounts thereof in the fat ingredient of the chocolate. Analysis of SUS composition was carried out using high performance liquid chromatography. The P/St ratio represents that of the constituent fatty acids of the SUS.

**Table 3**

| Fat Composition | | | | | | |
|---|---|---|---|---|---|---|
| mix | fat content(%) | POP | POS | SOS | P/St | lauric fats |
| Ex.1 | 38.4 | 29.2% | 9.5% | 6.4% | 3.04 | 26.0% |
| Ex.2 | 43.5 | 18.8 | 18.7 | 11.0 | 1.38 | 23.0 |
| Ex.3 | 47.2 | 25.5 | 22.9 | 13.1 | 1.51 | 8.4 |
| Ex.4 | 33.5 | 33.5 | 15.4 | 7.0 | 2.80 | 14.9 |
| Ex.5 | 60.9 | 24.4 | 20.0 | 12.3 | 1.54 | 16.4 |
| Ex.6 | 42.8 | 45.6 | 9.9 | 1.3 | 8.14 | 11.7 |
| Ex.7 | 44.5 | 17.6 | 21.3 | 13.0 | 1.20 | 22.5 |
| Comp.Ex.1 | 38.4 | 15.4 | 31.8 | 21.7 | 0.83 | 0.0 |
| Comp.Ex.2 | 38.4 | 11.0 | 22.2 | 15.0 | 0.81 | 26.0 |
| Comp.Ex.3 | 47.2 | 27.6 | 21.6 | 13.2 | 1.60 | 4.2 |
| Comp.Ex.4 | 47.2 | 15.4 | 12.2 | 7.5 | 1.58 | 42.4 |
| Comp.Ex.5 | 33.4 | 17.8 | 21.3 | 13.0 | 1.20 | 15.0 |

The underlined data in Table 3 are outside of the preferred range. The chocolate material mix thus obtained was subjected to tempering and the mix was put into a flexible mold made of a synthetic resin. After cooling at a cold temperature range of about 5°C for 30 minutes, the chocolate was released from the mold. Hardness and mouthfeel of the chocolate were evaluated at temperature ranges of freezing (-20°C) and refrigerating (5°C). The results are shown in Table 4-1. Tempering treatment was carried out by a conventional typical method, i.e. by heating and melting the chocolate material mix, cooling the mix to a temperature somewhat lower than the softening point of the chocolate to form fat crystals and re-heating after detection of increase in viscosity of the mix, or rise in temperature of the mix due to release of crystallization heat. Then, only unstable crystals were melted and the mix was cooled to 5°C to solidify it, followed by aging at 20°C.

**Table 4-1**

| Results of evaluation | | | |
|---|---|---|---|
| | softening point °C | mouthfeel at freezing | mouthfeel at refrigeration |
| Ex.1 | 27.0 | excellent | excellent |
| Ex.2 | 26.0 | excellent | excellent |
| Ex.3 | 27.2 | good | excellent |
| Ex.4 | 28.0 | good | good |
| Ex.5 | 26.0 | good (somewhat oily) | good (somewhat oily) |
| Ex.6 | 27.0 | excellent | excellent |
| Ex.7 | 27.5 | excellent | excellent |
| Comp.Ex.1 | 33.0 | bad (hard, difficult to) melt in mouth) | bad (difficult to melt in mouth) |
| Comp.Ex.2 | 27.0 | bad (pasty) | not good (pasty) |
| Comp.Ex.3 | 26.5 | not good (pasty) | not good (pasty) |
| Comp.Ex.4 | 23.0 | not good (soft) | bad (soft) |
| Comp.Ex.5 | 27.5 | not good (hard) | not good (hard) |

The underlined data are outside of the desired range.

### Examples 8 and 9 and Comparative Example 6

### Production of chocolate containing stable crystals of only SUS in which S has 20 to 24 carbon atoms

According to the same manner as described in the above Examples, chocolate was produced except that the additive prepared by Reference Example 1 was added to the chocolate material mix in an amount of 3% based on the chocolate and uniformly dispersed when the mix was cooled to a temperature higher than the softening point, i.e., 34°C instead of cooling the heated and melted mix to below the softening point by the conventional typical tempering method.

Softening points, mouthfeel in freezing and mouthfeel on refrigeration of the products are shown in Table 4-2. Any significant difference was not recognized in comparison with the above product without addition of the additive mentioned.

**Table 4-2**

| Results of evaluation | | | | |
|---|---|---|---|---|
| mix | additive | softening point (°C) | mouthfeel at freezing | mouthfeel at refrigeration |
| Ex.8 | Ref.1 | 26.5 °C | excellent | excellent |
| Ex.9 | Ref.1 | 25.8 | excellent | excellent |
| Comp.Ex.6 | ref.1 | 32.5 | bad (hard, difficult to melt in mouth) | bad (difficult to melt in mouth) |

The underlined data is outside of the preferred range.

In addition, the chocolate was subjected to a temperature cycle test between 20°C and 32°C (for 11 hours at each temperature, heating and cooling between the both temperatures for 30 minutes, 10 cycles) and the gloss of the surfaces were evaluated. The results are shown in Table 5.

**Table 5**

| Results of the cycle test | | |
|---|---|---|
| mix | conventional typical tempering | use of the additive of Reference Example 1 |
| Ex.8 | blooming | good gloss |
| Ex.9 | blooming | good gloss |
| Comp.Ex.6 | blooming | good gloss |

When the same cycle test was carried out by using the additive of Reference Example 2 instead of that of Reference Example 1, fat blooming occurred.

As described hereinabove, according to the present invention it is possible to produce chocolate which can be marketed at ordinary room temperature in spite of its low softening point. In addition, it is possible to obtain solid chocolate which has excellent hardness and melting properties in the mouth when it is eaten at a temperature range of freezing and refrigeration. Therefore, the present invention contributes very much to development of a new chocolate market.

## Claims

1. Chocolate which can be marketed at ordinary room temperature and used as solid *per se* chocolate sweets having a softening point of 15 to 30°C, wherein its fat ingredient comprises at least 40% by weight of fats rich in 2-unsaturated-1,3-disaturated triglycerides (SUS), the main constituent saturated fatty acids (S) of which have 16 to 18 carbon atoms and the constituent unsaturated fatty acid (U) of which is oleic acid, and stable crystals of only SUS, the constituent saturated fatty acids of which have 20 to 24 carbon atoms.

2. The chocolate according to claim 1, the amount of SUS the constituent saturated fatty acids of which have 20 to 24 carbons atoms is 0.5 to 3% by weight based on the chocolate.

3. The chocolate according to claim 1 which is eaten as it is as chocolate sweets.

4. The chocolate according to claim 1 which is held in a flexible mold.

5. The chocolate according to claim 1, wherein the fat ingredient comprises 95 to 40% by weight of fats rich in SUS in which S has 16 to 18 carbon atoms and 5 to 40% by weight of lauric fats and the ratio of the constituent saturated fatty acid having 16 carbon atoms to that having 18 carbon atoms of SUS (P/St ratio) is at least 1.

6. The chocolate according to claim 1, wherein the relation of the P/St ratio of SUS to the fat content (% by weight) of the chocolate is on or in the higher region than a line drawn by taking the points of
1.0 of the P/St ratio and 40% of the fat content,
1.2 of the P/St ratio and 35% of the fat content,
and
1.5 of the P/St ratio and 30% of the fat content in a graph plotting the fat content as ordinate and the P/St ratio as abscissa.

7. The chocolate according to claim 5, wherein the P/St ratio of SUS in the fat ingredient is at least 3.

8. The chocolate according to claim 5, wherein palm medium melting point fraction having an iodine value of at least 40 is used as the fats rich in SUS.

9. The chocolate according to claim 5, wherein a low melting point fraction of lauric fats is used as a lauric fat.

10. A process for producing chocolate which can be marketed at ordinary room temperature and used as solid per se chocolate sweets which comprises adding a material containing SUS stable crystals, the constituent saturated fatty acids of which have 20 to 24 carbon atoms, to a chocolate material mix having a softening point of 15 to 30°C and containing at least 40% by weight of fats rich in 2-unsaturated-1,3-disaturated triglycerides (SUS), the main constituent saturated fatty acids (S) of which have 16 to 18 carbon atoms and the constituent unsaturated fatty acid (U) of which is oleic acid, in its fat ingredient during a cooling step of the melted mix.

11. The process according to claim 10, wherein the material containing stable crystals of the SUS in which S has 20 to 24 carbon atoms is a powder or plastic additive.

## Patentansprüche

1. Schokolade, die bei normaler Raumtemperatur vertrieben werden kann und als Süßigkeit feste Schokolade per se, die einen Erweichungspunkt von 15 bis 30°C hat, verwendet wird, wobei ihr Fettingrediens mindestens 40 Gew.-% Fette, die reich an 2-ungesättigten-1,3-digesättigten Triglyceriden (SUS) sind, deren hauptsächlich am Aufbau beteiligten gesättigten Fettsäuren (S) 16 bis 18 Kohlenstoffatome haben und deren am Aufbau beteiligte ungesättigte Fettsäure (U) Ölsäure ist, und stabile Kristalle nur aus SUS, deren am Aufbau beteiligten gesättigten Fettsäuren 20 bis 24 Kohlenstoffatome haben, umfaßt.

2. Schokolade nach Anspruch 1, wobei die Menge an SUS, deren am Aufbau beteiligten gesättigten Fettsäuren 20 bis 24 Kohlenstoffatome haben, bezogen auf die Schokolade, 0,5 bis 3 Gew.-% ist.

3. Schokolade nach Anspruch 1, die so wie sie ist als Süßigkeit Schokolade gegessen wird.

4. Schokolade nach Anspruch 1, die in einer flexiblen Form gehalten wird.

5. Schokolade nach Anspruch 1, in der der Fettgehalt 95 bis 40 Gew.-% Fette, die reich an SUS sind, in denen S 16 bis 18 Kohlenstoffatome hat, und 5 bis 40 Gew.-% Lauricfette umfaßt und das Verhältnis der am Aufbau beteiligten gesättigten Fettsäure, die 16 Kohlenstoffatome hat, zu der, die 18 Kohlenstoffatome hat, in SUS (P/St-Verhältnis) mindestens 1 ist.

6. Schokolade nach Anspruch 1, worin die Beziehung des P/St-Verhältnisses in SUS zu dem Fettgehalt (Gew.-%) der Schokolade auf einer Linie oder im Bereich über einer Linie liegt, die durch die Punkte
- P/St-Verhältnis 1,0 und 40 % Fettgehalt;
- P/St-Verhältnis 1,2 und 35 % Fettgehalt; und
- P/St-Verhältnis 1,5 und 30 % Fettgehalt
in einem Diagramm, in dem der Fettgehalt als Ordinate und das P/Pst-Verhältnis als Abszisse aufgetragen sind, gezogen ist.

7. Schokolade nach Anspruch 5, in der das P/St-Verhältnis in SUS im Fettingrediens mindestens 3 ist.

8. Schokolade nach Anspruch 5, in der eine Palmfettfraktion mit mittlerem Schmelzpunkt, die eine Jodzahl von mindestens 40 hat, als Lauricfett verwendet wird.

9. Schokolade nach Anspruch 5, in der eine Fraktion mit niedrigem Schmelzpunkt von Lauricfetten verwendet wird.

10. Verfahren zur Herstellung von Schokolade, die bei normaler Raumtemperatur vertrieben werden kann und die als Süßigkeit feste Schokolade per se verwendet, umfassend
Zugeben eines Materials, das stabile SUS-Kristalle, deren am Aufbau beteiligten gesättigten Fettsäuren 20 bis 24 Kohlenstoffatome haben, enthält, zu einer Schokoladenmaterial-Mischung, die einen Erweichungspunkt von 15 bis 30°C hat und die mindestens 40 Gew.-% Fette, die reich an 2-ungesättigten-1,3-digesättigten Triglyceriden (SUS) sind, deren hauptsächlich am Aufbau beteiligten gesättigten Fettsäuren (S) 16 bis 18 Kohlenstoffatome haben und deren am Aufbau beteiligte ungesättigte Fettsäure (U) Ölsäure ist, in ihrem Fettingrediens enthält, während eines Kühlschrittes der geschmolzenen Mischung.

11. Verfahren nach Anspruch 10, wobei das Material, das stabile Kristalle von SUS, in denen S 20 bis 24 Kohlenstoffatome hat, enthält, ein Pulver oder ein Kunststoff-Zusatzstoff ist.

## Revendications

1. Chocolat pouvant être commercialisé à la température ambiante ordinaire et utilisé en tant que bonbons de chocolat tels quels solides, ayant un point de ramollissement de 15 à 30°C, dans lequel son ingrédient gras comprend au moins 40 % en poids de graisses riches en triglycérides 2-insaturés 1,3-disaturés (SUS), dont les acides gras saturés constitutifs principaux (S) ont 16 à 18 atomes de carbone, et dont l'acide gras insaturé constitutif (U) est l'acide oléique, et des cristaux stables de SUS uniquement, dont les acides gras saturés constitutifs ont 20 à 24 atomes de carbone.

2. Chocolat selon la revendication 1, dans lequel la quantité de SUS dont les acides gras saturés constitutifs ont 20 à 24 atomes de carbone est de 0,5 à 3 % en poids par rapport au chocolat.

3. Chocolat selon la revendication 1, qui est mangé tel quel sous forme de bonbons de chocolat.

4. Chocolat selon la revendication 1, qui est maintenu dans un moule flexible.

5. Chocolat selon la revendication 1, dans lequel l'ingrédient gras comprend 95 à 40 % en poids de graisses riches en SUS où S a 16 à 18 atomes de carbone et 5 à 40 % en poids de graisses lauriques et le rapport de l'acide gras saturé constitutif ayant 16 atomes de carbone à celui ayant 18 atomes de carbone du SUS (rapport P/St) vaut au moins 1.

6. Chocolat selon la revendication 1, dans lequel la relation entre le rapport P/St du SUS et la teneur en graisse (% en poids) du chocolat est dur ou dans la région supérieure à une ligne tracée par prise des points suivants :
1,0 du rapport P/St et 40 % de la teneur en graisse,
1,2 du rapport P/St et 35 % de la teneur en graisse, et
1,5 du rapport P/St et 30 % de la teneur en graisse,
dans un graphique traçant la teneur en graisse en ordonnées et le rapport P/St en abscisses.

7. Chocolat selon la revendication 5, dans lequel le rapport P/St du SUS dans l'ingrédient gras vaut au moins 3.

8. Chocolat selon la revendication 5, dans lequel une fraction à point de fusion moyen d'huile de palme ayant un indice d'iode d'au moins 40 est utilisée en tant que graisses riches en SUS.

9. Chocolat selon la revendication 5, dans lequel une fraction à bas point de fusion de graisses lauriques est utilisée en tant que graisse laurique.

10. Procédé pour produire un chocolat pouvant être commercialisé à la température ambiante ordinaire et utilisé en tant que bonbons de chocolat tels quels solides, qui comprend l'addition d'un matériau contenant des cristaux stables de SUS, dont les acides gras saturés constitutifs ont 20 à 24 atomes de carbone, à un mélange de matériaux pour chocolat ayant un point de ramollissement de 15 à 30°C et contenant au moins 40 % en poids de graisses riches en triglycérides 2-insaturés 1,3-disaturés (SUS), dont les acides gras saturés constitutifs principaux (S) ont 16 à 18 atomes de carbone et dont l'acide gras insaturé constitutif (U) est l'acide oléique, dans son ingrédient gras durant une étape de refroidissement du mélange fondu.

11. Procédé selon la revendication 10, dans lequel le matériau contenant des cristaux stables du SUS dans lequel S a 20 à 24 atomes de carbone est un additif pulvérulent ou plastique.
